# EUROPÄISCHE PATENTANMELDUNG

(11) **EP 2 458 570 A1**
(43) Veröffentlichungstag der Anmeldung: **30.05.2012**
(21) Anmeldenummer: 11006406.0
(22) Anmeldetag: 04.08.2011
(51) Int. Cl.: G08B 21/14, H02G 3/12

(54) **Elektrisches Installationsgerät mit Raumluftgüte-Sensor für ein Hausbussystem**

(30) Priorität: 01.10.2010 DE 102010047321
(71) Anmelder: ABB AG, 68309 Mannheim (DE)
(72) Erfinder: Schallenberg, Wolfgang, 40599 Düsseldorf (DE); Wieske, Stefan, 58285 Gevelsberg (DE); Zapp, Robert, 58579 Schalksmühle (DE); Lehnert, Christian, 58239 Schwerte (DE)

(57) **Zusammenfassung**

Es wird ein elektrisches Installationsgerät (1) mit Raumluftgüte-Sensor für ein Hausbussystem vorgeschlagen,
• mit einem Unterputz-Geräteeinsatz (3), einem Zentral-Sensorteil (13) und einem Abdeckrahmen (25),
• wobei der Unterputz-Geräteeinsatz (3) einen Busankoppler (10) aufweist, der einerseits über einen Busanschluss (11) mit einem Hausbussystem (33) und andererseits über eine Kontaktierung (22) mit dem Zentral-Sensorteil (13) verbindbar ist,
• wobei das Zentral-Sensorteil (13) einen CO2-bestimmenden Raumluftgüte-Sensor (17) und eine Steuereinheit (15) aufweist und diese Baukomponenten über die Kontaktierung (22) vom Hausbussystem (33) speisbar sind,
• wobei die Steuereinheit (15) das Sensorsignal des Raumluftgüte-Sensors (17) mittels einer Sensorsignal-Auswerteeinheit (35) auswertet und über den Busankoppler (10) an das Hausbussystem (33) weiterleitet.

## Beschreibung

Die Erfindung betrifft ein elektrisches Installationsgerät mit Raumluftgüte-Sensor für ein Hausbussystem.

Aus der DE 103 01 773 A1 ist ein elektrisches Installationsgerät bekannt, welches mit einer Kohlenmonoxid-Statusanzeige versehen ist. Die Kohlenmonoxid-Statusanzeige ist als Beschichtungsfeld mit einem chemischen Sensormaterial ausgebildet, welches die Anwesenheit von Kohlenmonoxid durch Farbwechsel anzeigt. Die Kohlenmonoxid-Statusanzeige kann in der Betätigungswippe eines Schaltgerätes integriert sein. Es ist gleichermaßen möglich, die Kohlenmonoxid-Statusanzeige in einem Rahmenteil bzw. Rahmen bzw. Abdeckrahmen bzw. in einer Abdeckung, Zentralscheibe, in einem Klappdeckel oder in einer Blindabdeckung eines elektrischen Installationsgerätes - wie Schalter, Taster, Dimmer, Steckdose, Zeitschaltuhr, Raumtemperaturregler, Daten-Kommunikationsgerät wie Telefonsteckdose, Radio/TV-Steckdose an beliebiger Position vorzusehen.

Der Erfindung liegt die Aufgabe zugrunde, ein optimiertes, elektrisches Installationsgerät mit Raumluftgüte-Sensor für ein Hausbussystem anzugeben.

Diese Aufgabe wird erfindungsgemäß gelöst durch ein elektrisches Installationsgerät mit Raumluftgüte-Sensor für ein Hausbussystem
- mit einem Unterputz-Geräteeinsatz, einem Zentral-Sensorteil und einem Abdeckrahmen,
- wobei der Unterputz-Geräteeinsatz einen Busankoppler aufweist, der einerseits über einen Busanschluss mit einem Hausbussystem und andererseits über eine Kontaktierung mit dem Zentral-Sensorteil verbindbar ist,
- wobei das Zentral-Sensorteil einen CO2-bestimmenden Raumluftgüte-Sensor und eine Steuereinheit aufweist und diese Baukomponenten über die Kontaktierung vom Hausbussystem speisbar sind,
- wobei die Steuereinheit das Sensorsignal des Raumluftgüte-Sensors mittels einer Sensorsignal-Auswerteeinheit auswertet und über den Busankoppler an das Hausbussystem weiterleitet.

Die mit der Erfindung erzielbaren Vorteile bestehen insbesondere darin, dass ein bussystemfähiges Installationsgerät für ein Meldesystem vorgeschlagen wird, welches sehr einfach in ein Installationsgeräte-Programm integrierbar ist und kontinuierlich die in einem Raum eines Gebäudes momentan herrschende Raumluftgüte bzw. das Raumklima erfasst und an ein angeschlossenes Hausbussystem meldet, worauf das Hausbussystem (respektive zusätzliche Automatisierungsgeräte des Hausbussystems) gezielt Maßnahmen zur Verbesserung der Raumluftgüte / des Raumklimas initiieren kann, wie Befeuchten oder Entfeuchten der Raumluft, Klimatisieren oder Beheizen der Raumluft, Erhöhen oder Reduzieren der Luftumwälzung der Raumluft.

Wird beim Installationsgerät die optionale Kombination mit einem Schaltelement gewählt, so ist ein einfacher Ersatz (Austausch) eines bestehenden Lichtschalters durch das erfindungsgemäße Installationsgerät möglich, wodurch sowohl die Funktion des Lichtschalters als auch die Funktion des Raumluftgüte-Sensors bzw. Raumklimasensors durch ein einziges Gerät erfüllt wird (gilt bei einem Hausbussystem). Zusätzlicher Installationsaufwand, wie Setzen einer zusätzlichen UP-Gerätedose und Montage zusätzlicher elektrischer Leistungen ist entbehrlich.

Das elektrische Installationsgerät kann mit beliebigen Komponenten eines konventionellen Installationsgeräte-Programms für Steckdosen / Schalter / Taster / Dimmer kombiniert werden, desgleichen wird ein konventioneller Abdeckrahmen dieses konventionellen Installationsgeräte-Programms eingesetzt. Unter konventionellen Installationsgeräte-Programmen werden dabei Programme verstanden, wie sie von zahlreichen Installationsgeräte-Herstellern vertrieben werden und verschiedene Wippschalter-Einsätze, Wipptaster-Einsätze, Dimmer-Einsätze, Steckdosen-Einsätze sowie Wippen und Abdeckrahmen 1fach, 2fach, 3fach, 4fach in bestimmten Designs und bestimmten Farben beinhalten.

Gleichermaßen ist eine vereinfachte Ausführungsform realisierbar, in welcher Zentral-Sensorteil und Abdeckrahmen eine (einstückige) Einheit bilden.

Zweckmäßige Ausgestaltungen der Erfindung sind in den Unteransprüchen gekennzeichnet.

Die Erfindung wird nachstehend anhand der in der Zeichnung dargestellten Ausführungsbeispiele dargestellt. Es zeigen:
- Fig. 1: eine Sicht auf ein Installationsgerät,
- Fig. 2: eine Seitenansicht eines Zentral-Sensorteils,
- Fig. 3: einen Schnitt durch ein montiertes Installationsgerät,
- Fig. 4, 5: perspektivische Ansichten auf ein Zentral-Sensorteil unterschiedlicher Ausführungsform,
- Fig. 6: eine perspektivische Ansicht auf Abdeckrahmen und Zentral-Sensorteil,
- Fig. 7: eine Basis-Ausführungsform des Installationsgerätes,
- Fig. 8: eine Ausführungsform des Installationsgerätes mit einer zusätzlichen Farbdisplay-Leuchtanzeige,
- Fig. 9: eine Ausführungsform des Installationsgerätes mit einem zusätzlichen Schaltelement,

- Fig. 10: eine bezüglich der Gas-Sensorik respektive Raumklima-Erfassung optimierte Ausführungsform des Installationsgerätes.

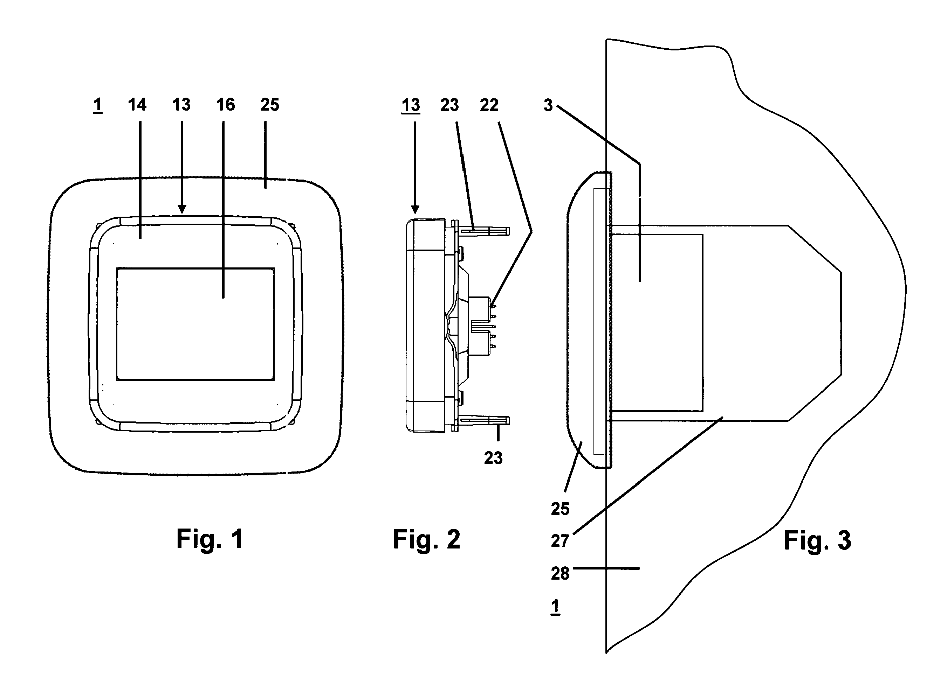

In Fig. 1 ist eine Sicht auf ein Installationsgerät 1 dargestellt. Es ist ein Zentral-Sensorteil 13 zu erkennen, welches eine optionale zentrale Farbdisplay-Leuchtanzeige 16 aufweist. Das Zentral-Sensorteil 13 kann optional mit einer Tastfläche 14 zur Ein-/Ausschaltung mindestens eines elektrischen Verbrauchers, insbesondere einer Raum-Beleuchtung, versehen sein. Das Zentral-Sensorteil 13 wird von einem Abdeckrahmen 25 eines konventionellen Installationsgeräte-Programms umrahmt.

In Fig. 2 ist eine Seitenansicht eines Zentral-Sensorteils dargestellt. Es ist eine an der Rückseite des Zentral-Sensorteils 13 angeordnete Kontaktierung 22 zu erkennen, welche zum Eingriff in eine korrespondierende Kontaktierung eines Unterputz-Geräteeinsatzes 3 (UP-Einsatz, siehe Fig. 3) dient. Des Weiteren sind mehrere Befestigungselemente 23 an der Rückseite des Zentral-Sensorteils 13 angeordnet, welche zum Eingriff in korrespondierende Ausnehmungen des Unterputz-Geräteeinsatzes 3 dienen, wodurch eine mechanische Fixierung von Zentral-Sensorteil 13 inklusive Abdeckrahmen 25 am Unterputz-Geräteeinsatz 3 erfolgt.

In Fig. 3 ist ein Schnitt durch ein montiertes Installationsgerät dargestellt. Es ist eine in einer Wand 28 montierte, handelsübliche UP-Gerätedose 27 zu erkennen, in welcher der Unterputz-Geräteeinsatz 3 des Installationsgerätes 1 installiert ist, vorzugsweise in konventioneller Weise mittels sich an der Seitenwandung der UP-Gerätedose 27 abstützender Spreizen oder mittels Schrauben, welche durch Ausnehmungen im Tragring des Unterputz-Geräteeinsatzes in Taschen der UP-Gerätedose 27 greifen. Das Installationsgerät 1 wird komplettiert durch den Abdeckrahmen 25.

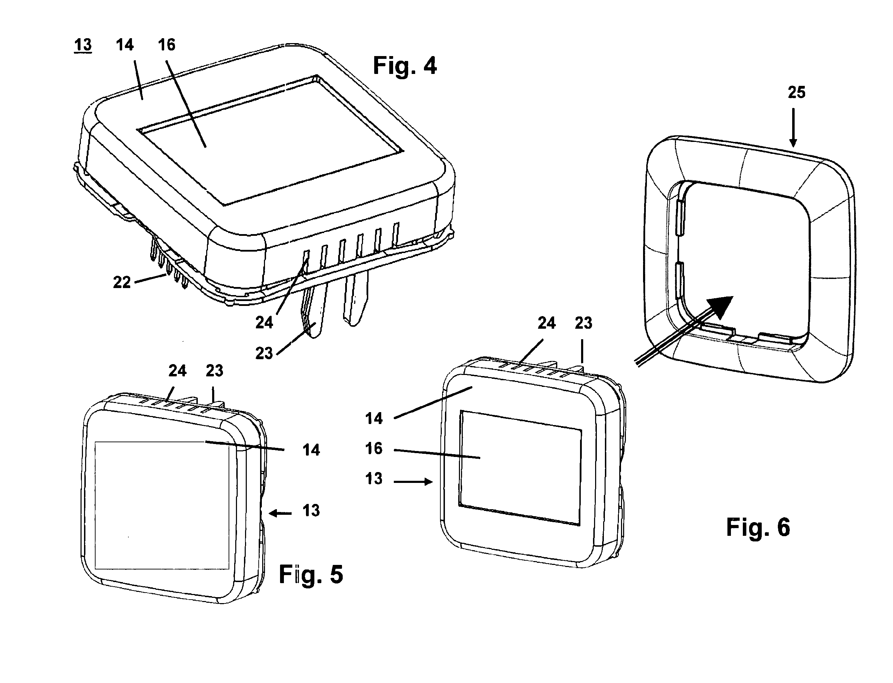

In Fig. 4 ist eine perspektivische Ansicht auf ein Zentral-Sensorteil 13 dargestellt. Es sind die frontseitig angeordnete, optionale Farbdisplay-Leuchtanzeige 16, die frontseitig zugängliche, optionale Tastfläche 14 zur Ein-/Ausschaltung eines elektrischen Verbrauchers (Raum-Beleuchtung), ein Teil der rückseitig angeordneten Befestigungselemente 23, die rückseitig angeordnete Kontaktierung 22 und oben und unten angeordnete Lüftungsschlitze 24 zu erkennen, durch welche Raumluft strömen kann. Beim in Fig. 5 gezeigten Zentral-Sensorteil 13 ist keine Farbdisplay-Leuchtanzeige 16 vorgesehen. Die funktionelle Tastfläche 14 kann, muss jedoch nicht vorhanden sein, d. h. bei der Grundausführung des Installationsgerätes sind weder Farbdisplay-Leuchtanzeige 16 noch funktionelle Tastfläche 14 vorgesehen.

In Fig. 6 ist eine perspektivische Ansicht auf Abdeckrahmen und Zentral-Sensorteil dargestellt. Durch einen Pfeil ist die räumliche Zuordnung des Zentral-Sensorteils 13 zum Abdeckrahmen 25 dargestellt. Beim Zentral-Sensorteil 13 sind Tastfläche 14, Farbdisplay-Leuchtanzeige 16, Lüftungsschlitze 24 und eines der Befestigungselemente 23 bezeichnet.

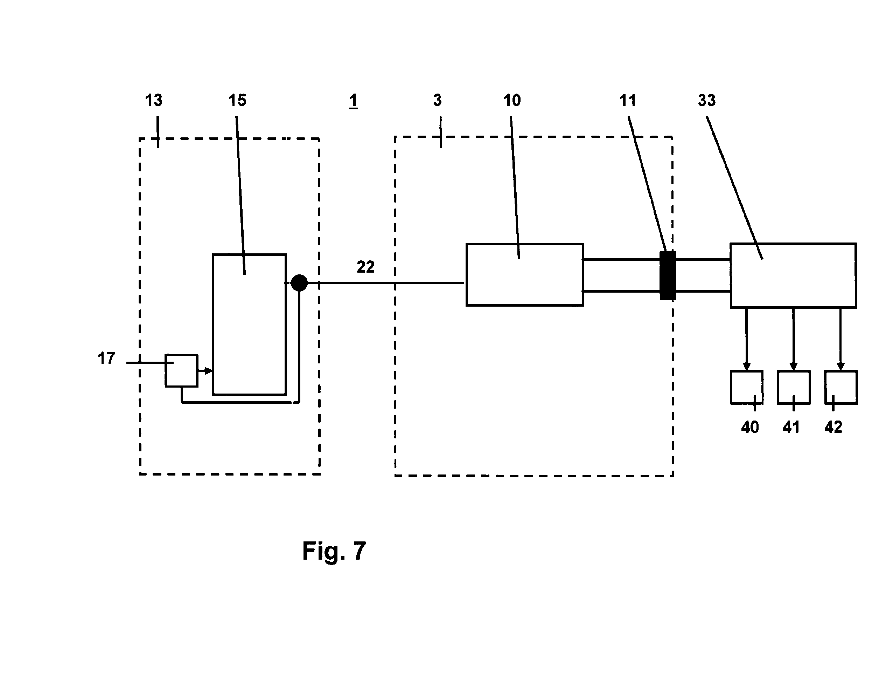

In Fig. 7 ist eine Basis-Ausführungsform des Installationsgerätes 1 schematisch dargestellt. Einerseits ist gezeigt, dass der Unterputz-Geräteeinsatz 3 einen Busankoppler 10 aufweist, welcher einerseits über seinen Busanschluss 11 an ein Hausbussystem 33 angeschlossen ist, vorzugsweise KNX (Standard für Haus- und Gebäudesystemtechnik der Konnex-Assoziation) oder PoE (Power over Ethernet). Andererseits ist zu erkennen, dass das Zentral-Sensorteil 13 über die Kontaktierung 22 mit dem weiteren Anschluss des Busankopplers 10 verbunden ist, wodurch zweckmäßig neben der Kommunikation zwischen Gerät und Bus auch die Energieversorgung einer Steuereinheit 15 und eines Raumluftgüte-Sensors 17 erfolgt. Die Steuereinheit 15 ist mit dem Raumluftgüte-Sensor 17 verbunden, welcher neben CO2 verschiedene Gase erfasst - wie bestimmte Geruchsgase und Ausgasungen - und aus den gemessenen Gasen und deren Mengen ein CO2-äquivalentes Signal berechnet.

Die Steuereinheit 15 beaufschlagt den Busankoppler 10 in Abhängigkeit des vom Raumluftgüte-Sensor 17 detektierten Messergebnisses. Wie zu erkennen ist, kann das Hausbussystem 33 in Abhängigkeit dieser Beaufschlagung Geräte zur Verbesserung der Raumluftgüte bzw. des Raumklimas ansteuern bzw. zur Regelung dieser Geräte beitragen, wie eine Heizungsanlage 40 (optional Klimatisierung / Kühlung), eine Befeuchtungsanlage / Entfeuchtungsanlage 41 und eine Lüftungsanlage 42. Des Weiteren ist es möglich, die detektierten Informationen betreffend Raumluftgüte / Raumklima an eine entfernte Anzeigeeinheit, wie ein zentrales Controlpanel, oder an beliebige Stellen des Hausbussystems weiterzuleiten bzw. zu verteilen. Am Controlpanel können beispielsweise nicht nur aktuelle Messwerte unterschiedlicher Räume eines Gebäude angezeigt, sondern auch deren zeitliche Verläufe dargestellt werden.

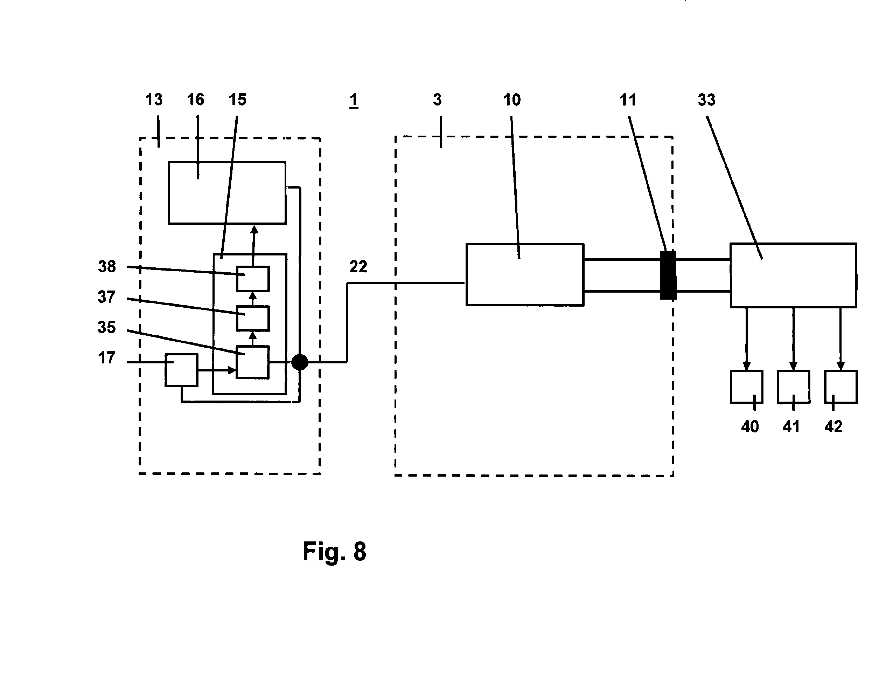

In Fig. 8 ist eine Ausführungsform des Installationsgerätes mit einer zusätzlichen Farbdisplay-Leuchtanzeige dargestellt. Die Energieversorgung der Farbdisplay-Leuchtanzeige 16 erfolgt über das Hausbussystem 33 und den Busankoppler 10. Die Steuereinheit 15 beaufschlagt außer dem Busankoppler 10 auch die Farbdisplay-Leuchtanzeige 16 in Abhängigkeit des vom Raumluftgüte-Sensor 17 detektierten Messergebnisses. Die optionale Farbdisplay-Leuchtanzeige 16 zeigt die detektierte Raumluftgüte in Form einer vorzugsweise dreifarbigen Anzeige an:
- durch Aufleuchten des grünen Bereichs wird angezeigt, dass die Raumluftgüte in Ordnung ist,
- durch Aufleuchten des gelben Bereichs wird angezeigt, dass sich die Raumluftgüte verschlechtert hat,
- durch Aufleuchten des roten Bereichs wird angezeigt, dass die Raumluft durch Lüften verbessert werden sollte.

Bei einer vereinfachten Ausführungsform wird z. B. durch Aufleuchten des grünen oder des roten Bereiches die Qualität der Raumluftgüte angezeigt.

In der einfachsten Ausführungsform ist lediglich ein einziger Bereich zur entsprechenden Signalisierung vorgesehen, d. h. z. B. bei Anzeige des roten Bereichs wird signalisiert, dass die Raumluft durch Lüften verbessert werden sollte. Ist die Qualität der Raumluft in Ordnung, erfolgt keinerlei Signalisierung.

Die Farbdisplay-Leuchtanzeige 16 kann alternativ
- in Form einer aus LEDs grün / gelb / rot in Form einer Luftgüteampel aufgebaut sein oder
- in Form einer flächigen Anzeige aus LCD und LED-Hinterleuchtung aufgebaut sein oder
- auf Basis einer OLED-Anzeige aufgebaut sein, die entweder eine LCD-Anzeige farbig hinterleuchtet oder die Information (Raumluftgüte) in Farbe und Text anzeigt.

Die Steuereinheit 15 besteht im Einzelnen aus einer Sensorsignal-Auswerteeinheit 35, die das Signal des Raumluftgüte-Sensors 17 empfängt und in ausgewerteter Form sowohl dem Busankoppler 10 als auch einer Schwellwertlogik 37 zuführt. Die Schwellwertlogik 37 setzt das ausgewertete Signal in ein für die Farbdisplay-Leuchtanzeige 16 geeignetes Signal um und führt es einer Farbdisplay-Ansteuereinheit 38 zu, welche korrespondierend hierzu die Leistungs-Ansteuerung der Farbdisplay-Leuchtanzeige 16 bewirkt, so dass beispielsweise
- die Farbdisplay-Leuchtanzeige 16 im Bereich bis 1000 ppm CO2 grün aufleuchtet,
- die Farbdisplay-Leuchtanzeige 16 im Bereich zwischen 1000 ppm CO2 und 2000 ppm CO2 gelb aufleuchtet,
- die Farbdisplay-Leuchtanzeige 16 im Bereich über 2000 ppm CO2 rot aufleuchtet.

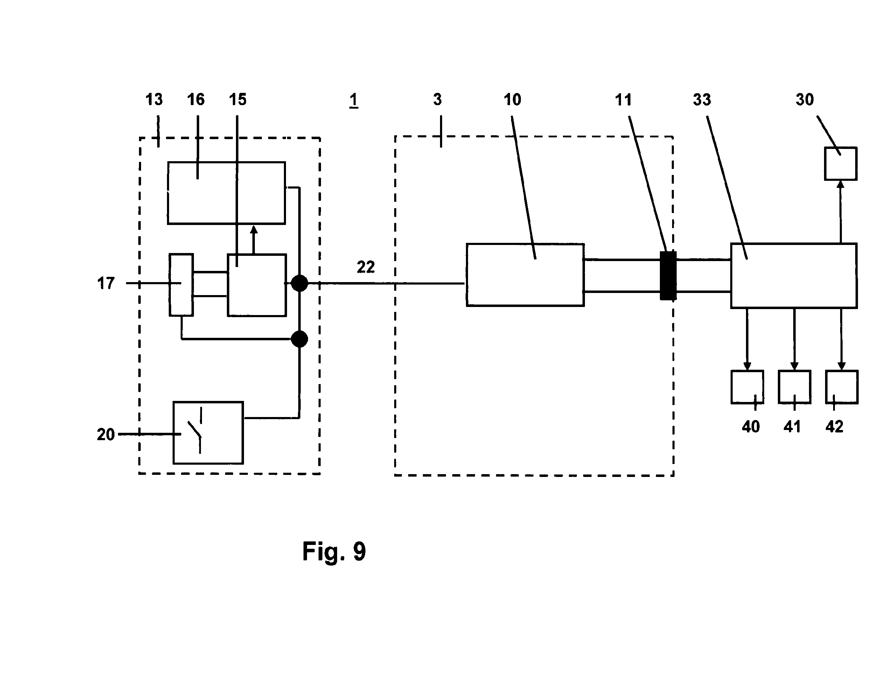

In Fig. 9 ist eine Ausführungsform des Installationsgerätes 1 mit einem zusätzlichen Schaltelement schematisch dargestellt. Zusätzlich zum Ausführungsbeispiel gemäß Fig. 7 weist das Zentral-Sensorteil 13 ein Schaltelement 20, insbesondere Taster auf, welches über die Tastfläche 14 beaufschlagbar ist und über die Kontaktierung 22 in Verbindung mit dem Busankoppler 10 steht. Durch Betätigung des Schaltelementes 20 lässt sich ein elektrischer Verbraucher 30, insbesondere eine Raum-Beleuchtung über das Hausbussystem 33 einschalten / ausschalten. Die Betätigung des Schaltelements 20 erfolgt durch Beaufschlagung / Berührung / Andrücken der Tastfläche 14 zur Ein-/Ausschaltung mindestens eines elektrischen Verbrauchers. Der Vorteil dieser Ausführungsform ist darin zu sehen, dass mit einem einzigen Installationsgerät 1 sowohl die Raum-Beleuchtung geschaltet als auch die für die Raumluftgüte bzw. das Raumklima signifikanten Werte erfasst, weiterverarbeitet und gemeldet werden können. Ein bereits vorhandener Lichtschalter kann durch das erfindungsgemäße Installationsgerät ausgetauscht werden, welches die Funktion des Einschaltens / Ausschaltens der Raum-Beleuchtung übernimmt.

Selbstverständlich ist auch eine weitere Ausführungsform des vorgeschlagenen Installationsgerätes realisierbar, bei welcher zwar das zusätzliche Schaltelement 20 inklusive Tastfläche 14 vorgesehen sind, nicht jedoch die Farbdisplay-Leuchtanzeige 16.

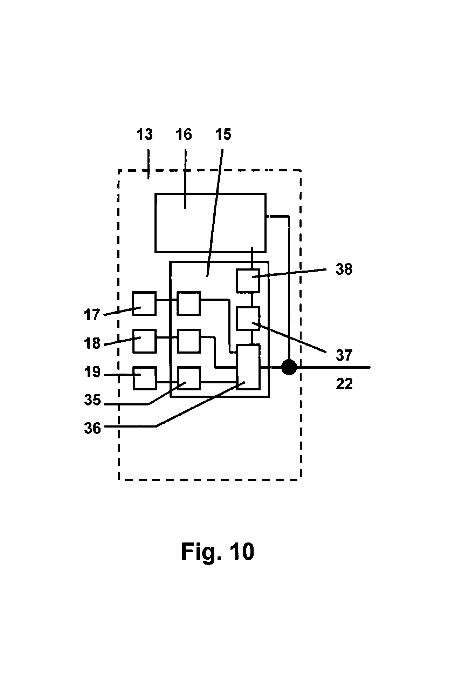

In Fig. 10 ist eine bezüglich der Gas-Sensorik respektive Raumklima-Erfassung optimierte Ausführungsform des Installationsgerätes schematisch dargestellt. Bei dieser Ausführungsform ist die Steuereinheit 15 mit einem Raumluftgüte-Sensor 17, einem Feuchte-Sensor 18 und einem Temperatur-Sensor 19 beschaltet, wodurch das Raumklima optimal erfasst werden kann. Des Weiteren kann auch ein Luftdruck-Sensor vorgesehen sein. Die Steuereinheit 15 besteht im Einzelnen aus Sensorsignal-Auswerteeinheiten 35 für den Raumluftgüte-Sensor 17, den Feuchte-Sensor 18, den Temperatur-Sensor 19 und gegebenenfalls den Luftdruck-Sensor, welche die Signale respektive die detektierten Messergebnisse der einzelnen Sensoren empfangen und in ausgewerteter Form einer Sensorsignal-Verknüpfungseinheit 36 zuführen, welche diese Signale miteinander verknüpft und den ermittelten Verknüpfungswert der Schwellwertlogik 37 und dem Busankoppler 10 zuführt. Die Schwellwertlogik 37 setzt das ausgewertete und verknüpfte Signal in ein für die Farbdisplay-Leuchtanzeige 16 geeignetes Signal um und führt es der Farbdisplay-Ansteuereinheit 38 zu, welche korrespondierend hierzu die Leistungs-Ansteuerung der Farbdisplay-Leuchtanzeige 16 bewirkt, wie unter Fig. 6 erläutert.

### Bezugszeichenliste

- 1: Installationsgerät
- 2: -
- 3: Unterputz-Geräteeinsatz (UP-Einsatz)
- 4: -
- 5: -
- 6: -
- 7: -
- 8: -
- 9: -
- 10: Busankoppler
- 11: Busanschluss
- 12: -
- 13: Zentral-Sensorteil
- 14: Tastfläche zur Ein-/Ausschaltung mindestens eines elektrischen Verbrauchers
- 15: Steuereinheit
- 16: Farbdisplay-Leuchtanzeige
- 17: Raumluftgüte-Sensor, Gas-Sensor, insbesondere CO2-Sensor
- 18: Feuchte-Sensor
- 19: Temperatur-Sensor
- 20: Schaltelement (Taster)
- 21: -
- 22: Kontaktierung
- 23: Befestigungselement
- 24: Lüftungsschlitze
- 25: Abdeckrahmen
- 26: -
- 27: UP-Gerätedose
- 28: Wand
- 29: -
- 30: elektrischer Verbraucher, insbesondere Raum-Beleuchtung
- 31: -
- 32: -
- 33: Hausbussystem
- 34: -
- 35: Sensorsignal-Auswerteeinheit
- 36: Sensorsignal-Verknüpfungseinheit
- 37: Schwellwertlogik
- 38: Farbdisplay-Ansteuereinheit
- 39: -
- 40: Heizungsanlage
- 41: Befeuchtungsanlage / Entfeuchtungsanlage
- 42: Lüftungsanlage

## Patentansprüche

1. Elektrisches Installationsgerät (1) mit Raumluftgüte-Sensor für ein Hausbussystem
• mit einem Unterputz-Geräteeinsatz (3), einem Zentral-Sensorteil (13) und einem Abdeckrahmen (25),
• wobei der Unterputz-Geräteeinsatz (3) einen Busankoppler (10) aufweist, der einerseits über einen Busanschluss (11) mit einem Hausbussystem (33) und andererseits über eine Kontaktierung (22) mit dem Zentral-Sensorteil (13) verbindbar ist,
• wobei das Zentral-Sensorteil (13) einen CO2-bestimmenden Raumluftgüte-Sensor (17) und eine Steuereinheit (15) aufweist und diese Baukomponenten über die Kontaktierung (22) vom Hausbussystem (33) speisbar sind,
• wobei die Steuereinheit (15) das Sensorsignal des Raumluftgüte-Sensors (17) mittels einer Sensorsignal-Auswerteeinheit (35) auswertet und über den Busankoppler (10) an das Hausbussystem (33) weiterleitet.

2. Elektrisches Installationsgerät (1) nach Anspruch 1, **dadurch gekennzeichnet, dass** das Zentral-Sensorteil (13) eine Farbdisplay-Leuchtanzeige (16) aufweist und die Steuereinheit (15) die Farbdisplay-Leuchtanzeige (16) in Abhängigkeit des Ergebnisses der Sensorsignal-Auswerteeinheit (35) über eine Schwellwertlogik (37) und mittels einer Farbdisplay-Ansteuereinheit (38) ansteuert.

3. Elektrisches Installationsgerät (1) nach Anspruch 1 oder 2, **dadurch gekennzeichnet, dass** das Zentral-Sensorteil (13) eine Tastfläche (14) aufweist, welche ein Schaltelement (20) beaufschlagt, welches über den Busankoppler (10) und das Hausbussystem (33) einen elektrischen Verbraucher (30), insbesondere eine Raum-Beleuchtung, einschaltet / ausschaltet.

4. Elektrisches Installationsgerät (1) nach einem der vorstehenden Ansprüche, **dadurch gekennzeichnet, dass** das Zentral-Sensorteil (13) außer dem Raumluftgüte-Sensor (17) einen Feuchte-Sensor (18) und / oder einen Temperatur-Sensor (19) und / oder einen Luftdruck-Sensor aufweist und die Steuereinheit (15) deren Signale mittels einer Sensorsignal-Verknüpfungseinheit (36) verknüpft.

5. Elektrisches Installationsgerät (1) nach einem der vorstehenden Ansprüche, **dadurch gekennzeichnet, dass** Zentral-Sensorteil (13) und Abdeckrahmen (25) eine Einheit bilden.
